# FASCICULE DE BREVET EUROPEEN

(11) **EP 2 310 715 B1**
(45) Date de publication et mention de la délivrance du brevet: **28.11.2012**
(21) Numéro de dépôt: 09784300.7
(22) Date de dépôt: 24.07.2009
(51) Int. Cl.: F16F 9/06, F16F 9/18

(54) **DISPOSITIF DE COMPENSATION DU VOLUME DU CORPS D'UN AMORTISSEUR HYDRAULIQUE DE SUSPENSION**
VORRICHTUNG ZUM AUSGLEICH DES VOLUMENS EINES KÖRPERS EINES HYDRAULISCHEN STOSSDÄMPFERS EINER AUFHÄNGUNG
DEVICE FOR COMPENSATING FOR THE VOLUME OF A BODY OF A HYDRAULIC SHOCK ABSORBER OF A SUSPENSION

(30) Priorité: 14.08.2008 FR 0804591
(43) Date de publication de la demande: 20.04.2011
(73) Titulaire: Crasset, Dominique, 45260 La Cour Marigny (FR)
(72) Inventeur: Crasset, Dominique, 45260 La Cour Marigny (FR)
(74) Mandataire: Debay, Yves
(86) Numéro de dépôt international: PCT/FR2009/000924
(87) Numéro de publication internationale: WO 2010/018319

(56) Documents cités:
- DE-C- 733 116
- FR-A- 1 110 201
- US-A- 2 004 380

## Description

La présente invention se rapporte au domaine des dispositifs amortisseurs de suspension et plus particulièrement au domaine des dispositifs de compensation du volume du corps des amortisseurs de suspension de véhicules ,terrestres (cf. par exemple US 2004 380 A, correspondant au préambule de la revendication indépendante 1 de produit ainsi qu'au préambule de la revendication indépendante 9 de procédé.

Un amortisseur est formé de plusieurs éléments incluant notamment une tige qui porte à une de ses extrémités une paroi mobile destinée à se déplacer en coulissant dans le corps d'un amortisseur, la seconde extrémité de la tige et le corps de l'amortisseur étant fixés à deux pièces susceptibles de réaliser entre elles un mouvement de déplacement destiné à être amorti par l'amortisseur. La tige de l'amortisseur est fixée à un tube extérieur qui coulisse en même temps que la paroi mobile en entourant le corps d'amortisseur.

Le corps d'amortisseur forme avec au moins une partie du tube extérieur un réservoir séparé en deux volumes par la paroi mobile de l'amortisseur et rempli d'un fluide hydraulique. La pénétration de la tige de l'amortisseur dans le corps de l'amortisseur entraine une augmentation de la pression exercée sur le fluide en mouvement dans l'amortisseur, une partie de la tige de l'amortisseur venant occuper le volume du réservoir formé par le corps d'amortisseur et le tube extérieur. Un fluide gazeux est capable de supporter facilement une compression lors de la diminution du volume du réservoir quand le réservoir est pénétré par la tige de l'amortisseur. En revanche lorsque le fluide est un liquide, comme par exemple de l'huile, le taux de compression est limité, restreignant la pénétration de la tige et le déplacement maximal de la paroi mobile jusqu'à un blocage de l'amortisseur, et donc réduisant les capacités de coulissement et donc d'amortissement de l'appareil. Il est alors nécessaire de compenser le volume du corps de l'amortisseur d'un volume équivalent au volume de tige qui a pénétré dans le corps.

Pour faire face à ce problème de compression du fluide d'un amortisseur dû à la pénétration de la tige dans le volume du réservoir de l'huile de l'amortisseur, plusieurs solutions sont actuellement proposées.

Une première solution consiste à utiliser un volume de gaz compressible sur lequel s'appuie le volume d'huile. A chaque entrée de la tige dans le volume d'huile, la compensation est assurée par l'élasticité du gaz contre lequel le volume occupé par l'huile transmet la pression due à la pénétration de la tige de l'amortisseur. Cette solution a l'avantage de maintenir l'huile en permanence sous pression en retardant les phénomènes d'émulsion susceptible de survenir. En revanche, une telle solution présente l'inconvénient d'être encombrante et coûteuse en nécessitant une séparation étanche entre les volumes d'huile et de gaz, un gonflage à l'azote et en imposant que la colonne d'huile soit positionnée en permanence à l'aval du piston.

Une seconde solution consiste à utiliser un amortisseur bitube. Cet amortisseur fait intervenir un tube partiellement rempli de gaz et d'huile qui entoure l'amortisseur. Un volume annulaire est ainsi disponible entre l'extérieur de l'amortisseur et l'intérieur du tube qui est utilisé comme un second réservoir pour recevoir le volume d'huile rejeté vers l'extérieur de l'amortisseur. L'huile rejetée dans ce second réservoir utilise alors également l'élasticité du gaz situé dans le volume annulaire pour permettre la compensation du volume de la tige qui occupe progressivement une partie du volume du réservoir d'huile dans l'amortisseur. Les déplacements, aller et retour, de l'huile entre le réservoir de l'amortisseur et le second réservoir formé par le volume annulaire est contrôlé par un système de clapets. Cependant, un tel dispositif d'amortissement a comme inconvénient d'être encombrant et d'être maintenu dans une position sensiblement verticale sans que l'huile de l'amortisseur ne demeure pressurisée, ce qui peut être notamment à l'origine de phénomènes de cavitation.

La présente invention a pour objet de palier un ou plusieurs inconvénients de l'art antérieur et notamment de proposer un nouveau dispositif d'amortissement qui permet une compensation du volume occupé par la tige lorsqu'elle pénètre dans le volume d'huile contenu dans le corps de l'amortisseur, tout en autorisant un positionnement sans restriction axiale avec un encombrement restreint par rapport aux dispositifs proposés par l'art antérieur, et un coût de fabrication limité.

Cet objectif est atteint grâce à un dispositif de compensation d'un amortisseur hydraulique de suspension destiné à être monté entre au moins deux parties d'un véhicule montées mobiles entre elles et/ou associées à un élément de ressort monté avec l'amortisseur, l'amortisseur hydraulique comprenant :
- un volume fixé à une première des deux parties du véhicule et intégrant une partie hydraulique formé par deux chambres séparées par la paroi mobile d'un piston présentant au moins un orifice pour le passage d'un liquide depuis une chambre vers une autre, le volume de la partie hydraulique étant constitué par au moins une cartouche qui forme un corps d'amortisseur,
- une tige du piston dont une première extrémité est fixée à la paroi mobile du piston et dont la seconde extrémité est fixée sur la seconde des deux parties du véhicule, la tige du piston étant alignée selon un axe parallèle à l'axe du corps d'amortisseur,
caractérisé en ce que le dispositif de compensation de l'amortisseur hydraulique comprend un tube extérieur formant une cartouche dans lequel le corps d'amortisseur est disposé, la paroi interne du tube extérieur étant susceptible de coulisser contre la paroi externe du corps de l'amortisseur pour compenser, au niveau de la chambre hydraulique dans laquelle est introduite la tige du piston, le volume de la partie de la tige du piston introduite dans la chambre hydraulique lors d'une phase de compression.

Selon une variante de réalisation, le dispositif de compensation d'un amortisseur hydraulique de suspension est caractérisé en ce que le coulissement entre la paroi interne du tube extérieur et la paroi externe du corps de l'amortisseur est réalisé par coulissement du tube externe vers le corps de l'amortisseur pour former un espace annulaire qui communique de façon étanche avec la chambre de la partie hydraulique du corps d'amortisseur dans laquelle la tige du piston pénètre lors d'une compression de l'amortisseur, l'espace annulaire étant destiné à recevoir au moins une partie du volume de liquide déplacé par le volume occupé par la tige du piston dans la chambre hydraulique lors de la compression, et en ce que l'espace annulaire communique avec la partie hydraulique du corps de l'amortisseur au niveau d'au moins un orifice positionné dans la partie du corps d'amortisseur située du coté de la chambre hydraulique occupée par la tige du piston.

Selon une autre particularité de la variante de réalisation, le dispositif de compensation d'un amortisseur hydraulique de suspension est caractérisé en ce que, dans un plan perpendiculaire à l'axe du piston et/ou du tube extérieur, la section de la tige du piston et la section de l'espace annulaire entre le tube extérieur et le corps de l'amortisseur ont des surfaces identiques de sorte que le volume occupé par la partie de la tige du piston qui a pénétré dans la chambre hydraulique est identique à l'accroissement du volume formé par l'espace annulaire entre le tube extérieur et le corps de l'amortisseur.

Selon une autre particularité de la variante de réalisation, le dispositif de compensation d'un amortisseur hydraulique de suspension est caractérisé en ce que, l'amortisseur étant un amortisseur oléopneumatique, une paroi étanche traversée par la tige du piston fermant le volume de la partie hydraulique à l'extrémité de la cartouche du corps d'amortisseur, la tige du piston est montée fixe avec le tube extérieur de sorte que la tige du piston et le tube extérieur sont solidaires en coulissement par rapport au corps d'amortisseur et permettent une coordination entre la pénétration de la tige du piston dans la chambre hydraulique et la formation d'un volume adapté par l'espace annulaire entre le tube extérieur et le corps d'amortisseur.

Selon une autre particularité de la variante de réalisation, le dispositif de compensation d'un amortisseur hydraulique de suspension est caractérisé en ce que la partie du tube extérieur qui n'est pas en regard du corps d'amortisseur est formée par une cartouche qui réalise un volume étanche dans laquelle un gaz est maintenu comprimé entre une extrémité de la cartouche et la face du corps d'amortisseur dans laquelle est insérée la tige du piston qui comprend une paroi maintenue étanche entre le volume de gaz et le volume de liquide par un premier joint positionné entre la paroi et la tige et par un second joint positionné entre le pourtour de la paroi et le bord interne du tube extérieur, le volume de gaz comprimé permettant de maintenir pressurisé le liquide de la partie hydraulique de l'amortisseur au travers de la paroi étanche en transmettant la pression du gaz sur le liquide de la partie hydraulique par l'intermédiaire des joints qui maintiennent étanche la séparation entre le gaz et le liquide effectuée par la paroi.

Selon une autre particularité de la variante de réalisation, le dispositif de compensation d'un amortisseur hydraulique de suspension est caractérisé en ce que, l'espace annulaire étant maintenu étanche par un ou plusieurs joints positionnés entre la paroi interne du tube extérieur et la paroi externe du corps de l'amortisseur et montés fixés sur la paroi interne du tube extérieur ou la paroi externe du corps de l'amortisseur, au moins un joint est susceptible de se déformer ou de se déplacer par rapport à la structure sur laquelle il est monté fixé pour compenser une variation du volume de l'espace annulaire.

Selon une autre variante de réalisation, le dispositif de compensation d'un amortisseur hydraulique de suspension est caractérisé en ce que, l'amortisseur étant couplé à un ressort dont une première extrémité est en appui contre la partie du véhicule à laquelle est fixée la tige du piston, le tube extérieur qui coulisse de façon étanche avec la cartouche du corps d'amortisseur forme également une cartouche qui ferme la partie hydraulique de l'amortisseur en étant traversé par la tige du piston, le tube extérieur comprend au moins un moyen d'accroche contre lequel la seconde extrémité du ressort s'appuie pour exercer une pression sur le tube extérieur et maintenir pressurisé le liquide de la cavité hydraulique.

Selon cette autre variante de réalisation, le dispositif de compensation d'un amortisseur hydraulique de suspension est caractérisé en ce que, la pénétration de la tige du piston dans la chambre hydraulique entraine un coulissement par écartement de la cartouche du corps d'amortisseur et de la cartouche du tube extérieur qui augmente le volume total de la partie hydraulique de l'amortisseur d'un volume proportionnel au volume de la partie de la tige du piston qui est pénétrée dans la chambre.

Un autre objectif de l'invention est de proposer un procédé de fonctionnement du dispositif de compensation de l'invention.

Cet objectif est atteint grâce à un procédé de fonctionnement d'un dispositif de compensation d'un amortisseur hydraulique de suspension selon l'invention, comprenant au moins :
- une étape de compression de l'amortisseur avec une pénétration d'au moins une partie de la tige du piston dans une des chambres de la partie hydraulique de l'amortisseur,
caractérisé en ce que le procédé comprend une étape de compensation grâce à :
- une étape de coulissement du corps d'amortisseur par rapport au tube extérieur pour adapter le volume annulaire à la pénétration de la tige du piston dans une des chambres hydrauliques.

Selon une variante de réalisation de l'invention, le procédé de fonctionnement d'un dispositif de compensation d'un amortisseur hydraulique de suspension est caractérisé en ce que le procédé comprend au moins une étape de maintien pressurisé du liquide de la partie hydraulique de l'amortisseur réalisée par :
- une étape de mise en pression créée par un gaz comprimé au travers d'une paroi étanche qui sépare la partie hydraulique liquide d'un volume de gaz comprimé de l'amortisseur en compensant la pression exercée par le liquide de la partie hydraulique contre la paroi étanche, ou
- une étape de mise en pression créée par un ressort qui comprime le tube extérieur pour diminuer le volume total de la partie hydraulique dans laquelle une partie de la tige du piston est pénétrée.

L'invention, avec ses caractéristiques et avantages, ressortira plus clairement à la lecture de la description faite en référence aux dessins annexés dans lesquels :

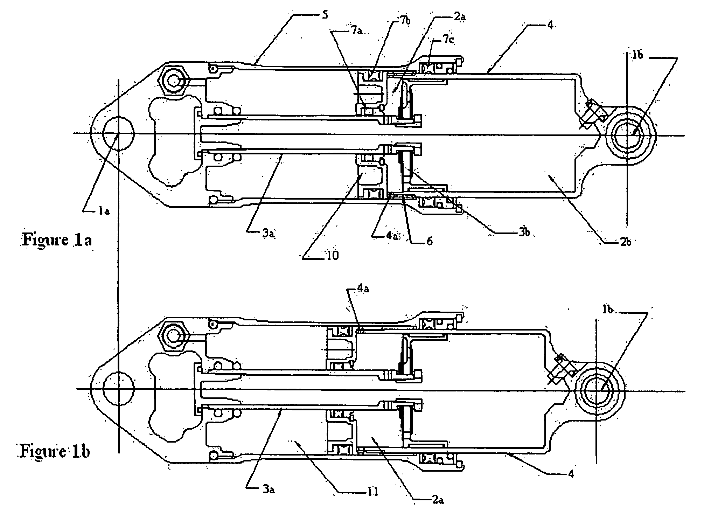

- la figure 1a représente schématiquement un exemple de coupe latérale d'une première variante du dispositif de compensation d'un amortisseur de suspension de l'invention lorsque l'amortisseur est en extension,
- la figure 1b représente schématiquement un exemple de coupe latérale d'une première variante du dispositif de compensation d'un amortisseur de suspension de l'invention lorsque l'amortisseur est en compression,

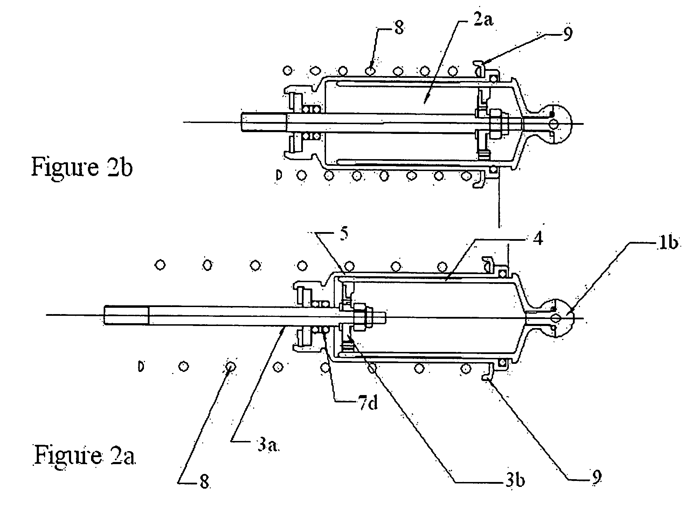

- la figure 2a représente schématiquement un exemple de coupe latérale d'une seconde variante du dispositif de compensation d'un amortisseur de suspension de l'invention lorsque l'amortisseur est en extension,
- la figure 2b représente schématiquement un exemple de coupe latérale d'une seconde variante du dispositif de compensation d'un amortisseur de suspension de l'invention lorsque l'amortisseur est en compression.

Le dispositif de l'invention concerne un dispositif de compensation destiné à être intégré dans un amortisseur de suspension monté entre deux parties mobiles d'un véhicule. Ce dispositif a pour objectif de supprimer le problème de l'incompressibilité du liquide d'un amortisseur hydraulique lorsque la tige (3a) du piston de l'amortisseur augmente son volume introduit dans la partie hydraulique (2a, 2b) de l'amortisseur lors d'une phase de compression de l'amortisseur.

Selon un premier mode de réalisation, l'amortisseur est oléopneumatique. L'amortisseur comprend une partie hydraulique (2a, 2b) qui forme un réservoir pour un liquide hydraulique, par exemple de l'huile ou tout autre liquide de type connu utilisé dans les amortisseurs hydrauliques. Ce réservoir hydraulique (2a, 2b) est réalisé par une cartouche formée par le corps d'amortisseur (4). Cette cartouche a son orifice obturé par une paroi (10) traversée par la tige (3a) du piston. L'orifice (10a) de passage de la tige (3a) au travers de la paroi (10) intègre un joint (7a) qui maintient une étanchéité en assurant la jonction entre la tige (3a) et la paroi (10) du réservoir hydraulique. L'extrémité extérieure (1b) de la cartouche du corps d'amortisseur (4) est fixée sur une première des parties mobiles du véhicule sur lequel l'amortisseur est monté. Le corps d'amortisseur (4) est inséré dans une pièce qui forme un tube extérieur (5). Le positionnement est réalisé de telle sorte que la paroi externe de la face radiale du corps d'amortisseur (4) est montée coulissante avec la paroi interne du tube extérieur (5). Le corps d'amortisseur (4) et le tube extérieur (5) sont tous les deux montés coaxiaux de sorte qu'ils puissent coulisser axialement l'un par rapport à l'autre. Ces deux éléments (4, 5) possèdent donc des sections transversales de formes identiques préférentiellement circulaires, bien que des formes, autres que circulaire, puissent être utilisées dans le cadre de la réalisation de l'invention. Le réservoir hydraulique (2a, 2b) est divisé en deux chambres (2a, 2b), séparées entre elles, par une paroi mobile (3b) montée sur une première extrémité de la tige (3a) du piston de l'amortisseur. La seconde extrémité (1a) de la tige (3a), extérieure à la partie hydraulique, est fixée sur la seconde des parties mobiles du véhicule sur lequel l'amortisseur intervient.

La chambre (2a) du réservoir hydraulique (2a, 2b) dans laquelle est disposée la tige (3a) du piston de l'amortisseur communique avec un volume annulaire (6) situé entre la paroi externe de la face radiale du corps de l'amortisseur (4) et la face interne du tube extérieur (5). Le diamètre interne du tube extérieur (5) est donc sensiblement supérieur au diamètre externe du corps de l'amortisseur (4) de sorte qu'un espace annulaire se trouve formé sur la longueur de ces deux éléments (4, 5) située en regard l'un de l'autre. La communication de cet espace annulaire (6) avec la chambre (2a) du réservoir hydraulique (2a, 2b) s'effectue au niveau d'un ou de plusieurs orifices (4a) positionnés sur la périphérie de l'extrémité du corps d'amortisseur (4) proche de la paroi (10) d'obturation. Ces orifices (4a) peuvent prendre, par exemple, la forme d'alésages qui traversent l'épaisseur du corps d'amortisseur (4), ou bien encore la forme de saignée réalisée dans l'épaisseur et sur la paroi externe du corps d'amortisseur (4). L'étanchéité de l'espace annulaire (6) est assurée d'une part par un premier joint (7c) qui réalise l'étanchéité entre la face interne du tube extérieur (5) et la face externe du corps de l'amortisseur (4) au niveau de l'extrémité du volume annulaire (6) située du coté de la fixation du corps d'amortisseur (4) sur le véhicule et d'autre part par un second joint (7b) qui réalise l'étanchéité entre le bord externe de la paroi (10) étanche formant l'extrémité du corps de l'amortisseur (4) et la face interne du tube extérieur (5). Le premier joint (7c) est monté dans l'extrémité de la paroi interne du tube extérieur (5) et assure l'étanchéité en coulissant contre la paroi externe du corps d'amortisseur (4). Le second joint (7b) est monté à l'extrémité du corps d'amortisseur (4) située du coté de la chambre (2a) du réservoir hydraulique (2a, 2b) qui comprend la tige (3a) du piston. Ce second joint (7b) peut être fixé directement sur l'extrémité du corps d'amortisseur (4) ou bien encore sur le bord radial de la paroi (10) qui obture la cartouche du corps d'amortisseur (4) pour former le réservoir (2a, 2b) du liquide hydraulique. Ce second joint (7b) coulisse alors contre la face interne du tube extérieur (5). Les joints (7b, 7c) sont maintenus en position au cours du frottement lors du coulissement grâce à des moyens anti-extrusion qui maintiennent les joints (7b, 7c) en position.

Le volume annulaire (6) est variable en fonction de la longueur des faces radiales du corps d'amortisseur (4) et du tube extérieur (5) qui se font face et donc du coulissement du corps d'amortisseur (4) par rapport au tube extérieur (5) et de la distance séparant les joints (7b, 7c) qui maintiennent l'espace annulaire (6) étanche. Le tube extérieur (5) est monté solidaire en coulissement avec la tige (3a) du piston dans l'amortisseur de sorte que le mouvement de la paroi mobile (3b) est lié à celui du tube extérieur (5). Cette solidarité en coulissement permet, lors de la compression de l'amortisseur avec la pénétration de la tige (3a) dans la chambre (2a) du réservoir, d'augmenter le volume annulaire (6). Le volume du réservoir hydraulique (2a, 2b) occupé par le corps de la tige (3a) est alors compensé par le volume annulaire (6) qui augmente le volume total du réservoir hydraulique (2a, 2b). Une partie du liquide hydraulique est ainsi déplacé depuis la chambre (2a) qui reçoit la tige (3a) du piston vers l'espace annulaire (6) entre le tube extérieur (5) et le corps d'amortisseur (4).

Selon une particularité de réalisation, dans une section perpendiculaire à l'axe de la tige (3a) du piston, la surface de l'espace annulaire (6) est identique à la surface de la tige (3a). Cette identité des surfaces des sections permet d'obtenir une compensation parfaite du volume occupé par la partie de la tige (3a) introduite dans la chambre (2a) hydraulique du réservoir (2a, 2b). La course de compensation du tube extérieur (5) pour faire apparaître le volume annulaire (6) est alors strictement identique au volume de la tige (3a) qui s'ajoute au volume de totale du réservoir (2a, 2b) hydraulique.

Selon une variante de réalisation, les joints (7b, 7c) qui garantissent l'étanchéité de l'espace annulaire (6) sont déformables, par exemple des joints toriques creux. Ces joints (7b, 7c) peuvent également être montés mobiles par rapport à la structure sur laquelle ils sont respectivement fixés. Cette mobilité se traduit par un déplacement du joint par rapport à la structure qui le porte, ce déplacement étant un mouvement supplémentaire au coulissement du joint contre la surface de la structure en regard de laquelle il est positionné. Cette mobilité particulière des joints (7b, 7c) permet une adaptation du volume annulaire (6) complémentaire au coulissement du tube extérieur (5) par rapport au corps d'amortisseur (4). Cette adaptation peut être notamment nécessaire lorsque la section de la tige (3a) du piston présente une surface différente de la surface de la section de l'espace annulaire (6). Cette adaptation peut également être nécessaire pour compenser une dilatation éventuelle du liquide de l'amortisseur suite à son échauffement.

Selon une autre particularité de réalisation, le tube extérieur (5) forme également une cartouche dans laquelle est montée la tige (3a) du piston. Cette cartouche (5) permet de former un volume (11) refermé par la paroi (10) montée à l'extrémité du corps d'amortisseur (4). Ce volume est maintenu étanche d'une part grâce au joint (7a) qui assure la jonction entre le corps de la tige (3a) du piston et la paroi (10) et d'autre part grâce au joint (7b) positionné sur le bord de la paroi (10) contre la face interne du tube extérieur. Ce volume étanche (11) conserve un gaz emprisonné pour d'une part permettre un rappel de l'amortisseur et d'autre part permettre une pressurisation du liquide hydraulique dans le réservoir grâce à une transmission de la pression du gaz sur le liquide au travers de la paroi (10) fixée à l'extrémité du corps d'amortisseur (4). En effet, lorsque l'amortisseur est en phase de compression, le corps d'amortisseur (4) coulisse dans le tube extérieur (5) de sorte que simultanément, la tige (3a) du piston coulisse dans le réservoir (2a, 2b) hydraulique du corps d'amortisseur (4) pour déplacer la paroi (3b) mobile du piston. Ce coulissement entraîne concomitamment le coulissement de la paroi (10) qui ferme la cartouche du corps d'amortisseur (4) à l'intérieur du tube extérieur (5), effectuant la compression du gaz emprisonné dans le volume du tube intérieur (5). Le gaz comprimé transfert une pression au travers des joints (7a, 7b) de la paroi (10) et permet de maintenir pressurisé le liquide hydraulique dans le réservoir (2a, 2b) lorsque le déplacement de la paroi mobile (3b) du piston entraîne une baisse de pression du liquide dans la chambre (2a) qui reçoit la tige (3a) du piston. Ce transfert de pression, depuis le gaz vers le liquide hydraulique au travers de la paroi (10), permet de retarder, voire d'éviter, des phénomènes d'émulsion et/ou de cavitation dans le liquide hydraulique. Le tube extérieur (5) est ainsi une même structure pour former le réservoir (11) de gaz comprimé, le réservoir hydraulique (2a, 2b) et le volume annulaire (6) qui participe à la compensation du volume de la tige (3a) du piston introduite dans une (2a) des chambres de l'amortisseur.

Selon un second mode de réalisation l'amortisseur est associé à un ressort (8) qui assure notamment le rappel de l'amortisseur en extension après une phase de compression. Dans ce second mode de réalisation, le réservoir hydraulique (2a, 2b) est réalisé par une première cartouche formée par le corps d'amortisseur (4) introduite dans une seconde cartouche formée par le tube extérieur (5). Les deux cartouches (4, 5) sont insérées l'une dans l'autre de sorte que la première puisse coulisser axialement dans la seconde. Ce coulissement permet d'obtenir un réservoir (2a, 2b) dont le volume total peut varier en fonction du coulissement du corps d'amortisseur (4) par rapport au tube extérieur (5), tout en conservant une certaine longueur de leurs faces radiales respectives en regard l'une par rapport à l'autre.

Tout comme dans le cadre du premier mode de réalisation, le corps d'amortisseur (4) et le tube extérieur (5) peuvent présenter une section cylindrique, ou toute autre section adaptée à un coulissement axial des éléments (4, 5) entre eux. De plus, l'extrémité extérieure du corps d'amortisseur (4) est également fixée sur une des parties mobiles du véhicule sur lequel l'amortisseur est monté. L'autre extrémité de l'amortisseur est fixée sur la seconde partie mobile du véhicule sur laquelle est montée l'extrémité de la tige (3a) du piston.

La tige (3a) du piston traverse l'extrémité de la cartouche du tube extérieur (5) et coulisse au travers de façon à déplacer la paroi mobile (3b) du piston dans le réservoir (2a, 2b) hydraulique Le tube extérieur (5) et la tige (3a) sont deux pièces qui ne sont pas fixées entre elles puisque la tige (3a) coulisse en traversant le tube extérieur (5). La jonction entre la tige (3a) et l'extrémité de la cartouche du tube extérieur (5) s'effectue par l'intermédiaire d'un joint (7d) qui en assure l'étanchéité. Cette paroi mobile (3b) assure la division du réservoir (2a, 2b) de l'amortisseur en deux chambres (2a, 2b). Le coulissement de la tige (3a) s'effectue selon un axe parallèle ou identique à l'axe de coulissement du tube extérieur (5) par rapport au corps de l'amortisseur (4).

Lorsque l'amortisseur entre en phase de compression, le volume occupé par la tige (3a) qui pénètre dans le réservoir hydraulique (2a, 2b) est compensé par un coulissement qui écarte le tube extérieur (5) du corps d'amortisseur (4). Cette écartement entraîne une augmentation du volume total du réservoir (2a, 2b) hydraulique et permet de compenser le volume de la partie de la tige (3a) introduite dans la chambre (2a). La course de compensation du tube extérieur (5) s'effectue ainsi avec un coulissement selon un sens opposé au sens de déplacement de la tige (3a) du piston.

Selon un mode de réalisation préféré du second mode de réalisation de l'invention, la face externe de la paroi radiale du tube extérieur (5) porte un ou plusieurs épaulements (9). Ces épaulements (9) forment un appui pour une extrémité du ressort (8) associé à l'amortisseur. La seconde extrémité du ressort (8) prend appui contre un élément fixé, par exemple avec la tige (3a) du piston, sur une seconde partie mobile du véhicule sur laquelle est monté l'amortisseur. Le ressort (8), en s'appuyant contre un épaulement (9), exerce un rappel du tube extérieur (5) et maintient pressurisé le liquide hydraulique pour empêcher l'apparition de phénomènes de cavitation et d'émulsion dans le liquide de l'amortisseur.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Dispositif de compensation d'un amortisseur hydraulique de suspension destiné à être monté entre au moins deux parties d'un véhicule montées mobiles entre elles et/ou associées à un élément de ressort (8) monté avec l'amortisseur, l'amortisseur hydraulique comprenant :
- un volume, fixé à une première (1b) des deux parties du véhicule et intégrant une partie hydraulique (2a, 2b) et formé par deux chambres (2a, 2b) séparées par la paroi mobile (3b) d'un piston présentant au moins un orifice pour le passage d'un liquide depuis une chambre vers une autre, le volume de la partie hydraulique (2a, 2b) étant constitué par au moins une cartouche qui forme un corps d'amortisseur (4),
- une tige (3a) du piston dont une première extrémité est fixée à la paroi mobile (3b) du piston et dont la seconde extrémité est fixée sur la seconde (1a) des deux parties du véhicule, la tige (3a) du piston étant alignée selon un axe parallèle à l'axe du corps d'amortisseur (4),
**caractérisé en ce que** le dispositif de compensation de l'amortisseur hydraulique comprend un tube extérieur (5) formant une cartouche dans lequel le corps d'amortisseur (4) est disposé, la paroi interne du tube extérieur (5) étant susceptible de coulisser contre la paroi externe du corps de l'amortisseur (4) pour compenser, au niveau de la chambre (2a) hydraulique dans laquelle est introduite la tige (3a) du piston, le volume de la partie de la tige (3a) du piston introduite dans la chambre (2a) hydraulique lors d'une phase de compression.

2. Dispositif de compensation d'un amortisseur hydraulique de suspension selon la revendication 1, **caractérisé en ce que** le coulissement entre la paroi interne du tube extérieur (5) et la paroi externe du corps de l'amortisseur (4) est réalisé par coulissement du tube externe vers le corps de l'amortisseur pour former un espace annulaire (6) qui communique de façon étanche avec la chambre (2a) de la partie hydraulique du corps d'amortisseur dans laquelle la tige (3a) du piston pénètre lors d'une compression de l'amortisseur, l'espace annulaire (6) étant destiné à recevoir au moins une partie du volume de liquide déplacé par le volume occupé par la tige (3a) du piston dans la chambre (2a) hydraulique lors de la compression, et **en ce que** l'espace annulaire (6) communique avec la partie hydraulique du corps de l'amortisseur (4) au niveau d'au moins un orifice (4a) positionné dans la partie du corps d'amortisseur (4) située du coté de la chambre (2a) hydraulique occupée par la tige (2a) du piston.

3. Dispositif de compensation d'un amortisseur hydraulique de suspension selon la revendication 2, **caractérisé en ce que**, dans un plan perpendiculaire à l'axe du piston et/ou du tube extérieur (5), la section de la tige (3a) du piston et la section de l'espace annulaire (6) entre le tube extérieur (5) et le corps de l'amortisseur (4) ont des surfaces identiques de sorte que le volume occupé par la partie de la tige (3a) du piston qui a pénétré dans la chambre hydraulique (2a, 2b) est identique à l'accroissement du volume formé par l'espace annulaire (6) entre le tube extérieur (5) et le corps de l'amortisseur (4).

4. Dispositif de compensation d'un amortisseur hydraulique de suspension selon une des revendications 2 à 3, **caractérisé en ce que**, l'amortisseur étant un amortisseur oléopneumatique, une paroi étanche (10) traversée par la tige (3a) du piston fermant le volume de la partie hydraulique à l'extrémité de la cartouche du corps d'amortisseur (4), la tige (3a) du piston est montée fixe avec le tube extérieur (5) de sorte que la tige (3a) du piston et le tube extérieur (5) sont solidaires en coulissement par rapport au corps d'amortisseur (4) et permettent une coordination entre la pénétration de la tige (3a) du piston dans la chambre hydraulique (2a) et la formation d'un volume adapté par l'espace annulaire (6) entre le tube extérieur (5) et le corps d'amortisseur (4).

5. Dispositif de compensation d'un amortisseur hydraulique de suspension selon une la revendication 4, **caractérisé en ce que** la partie du tube extérieur (5) qui n'est pas en regard du corps d'amortisseur (4) est formée par une cartouche qui réalise un volume (11) étanche dans laquelle un gaz est maintenu comprimé entre une extrémité de la cartouche et la face du corps d'amortisseur (4) dans laquelle est insérée la tige (3a) du piston qui comprend une paroi (10) maintenue étanche entre le volume de gaz et le volume de liquide par un premier joint (7a) positionné entre la paroi (10) et la tige (3a) et par un second joint (7b) positionné entre le pourtour de la paroi (10) et le bord interne du tube extérieur (5), le volume de gaz comprimé permettant de maintenir pressurisé le liquide de la partie hydraulique de l'amortisseur au travers de la paroi étanche (10) en transmettant la pression du gaz sur le liquide de la partie hydraulique par l'intermédiaire des joints (7a, 7b) qui maintiennent étanche la séparation entre le gaz et le liquide effectuée par la paroi (10).

6. Dispositif de compensation d'un amortisseur hydraulique de suspension selon une des revendications 2 à 5, **caractérisé en ce que**, l'espace annulaire (6) étant maintenu étanche par un ou plusieurs joints (7b, 7c) positionnés entre la paroi interne du tube extérieur (5) et la paroi externe du corps de l'amortisseur (4) et montés fixés sur la paroi interne du tube extérieur (5) ou la paroi externe du corps de l'amortisseur (4), au moins un joint (7b, 7c) est susceptible de se déformer ou de se déplacer par rapport à la structure sur laquelle il est monté fixé pour compenser une variation du volume de l'espace annulaire (6).

7. Dispositif de compensation d'un amortisseur hydraulique de suspension selon la revendication 1, **caractérisé en ce que**, l'amortisseur étant couplé à un ressort (8) dont une première extrémité est en appui contre la partie du véhicule à laquelle est fixée la tige (3a) du piston, le tube extérieur (5) qui coulisse de façon étanche avec la cartouche du corps d'amortisseur (4) forme également une cartouche qui ferme la partie hydraulique (2a, 2b) de l'amortisseur en étant traversé par la tige (3a) du piston, le tube extérieur (5) comprend au moins un moyen d'accroche (9) contre lequel la seconde extrémité du ressort (8) s'appuie pour exercer une pression sur le tube extérieur (5) et maintenir pressurisé le liquide de la cavité hydraulique (2a, 2b).

8. Dispositif de compensation d'un amortisseur hydraulique de suspension selon la revendication 7, **caractérisé en ce que**, la pénétration de la tige (3a) du piston dans la chambre hydraulique (2a, 2b) entraîne un coulissement par écartement de la cartouche du corps d'amortisseur (4) et de la cartouche du tube extérieur (5) qui augmente le volume total de la partie hydraulique (2a, 2b) de l'amortisseur d'un volume proportionnel au volume de la partie de la tige (3a) du piston qui est pénétrée dans la chambre (2a).

9. Procédé de fonctionnement d'un dispositif de compensation d'un amortisseur hydraulique de suspension selon une des revendications 1 à 8, comprenant au moins :
- une étape de compression de l'amortisseur avec une pénétration d'au moins une partie de la tige (3a) du piston dans une des chambres (2a, 2b) de la partie hydraulique (2a, 2b) de l'amortisseur,
**caractérisé en ce que** le procédé comprend une étape de compensation grâce à :
- une étape de coulissement du corps d'amortisseur (4) par rapport au tube extérieur (5) pour adapter le volume annulaire (6) à la pénétration de la tige (3a) du piston dans une des chambres hydrauliques (2a, 2b).

10. Procédé de fonctionnement selon la revendication 9 d'un dispositif de compensation d'un amortisseur hydraulique de suspension selon une des revendications 6 à 8, **caractérisé en ce que** le procédé comprend au moins une étape de maintien pressurisé du liquide de la partie hydraulique (2a, 2b) de l'amortisseur réalisée par :
- une étape de mise en pression créée par un gaz comprimé au travers d'une paroi étanche (10) qui sépare la partie hydraulique liquide (2a, 2b) d'un volume de gaz comprimé de l'amortisseur en compensant la pression exercée par le liquide de la partie hydraulique (2a, 2b) contre la paroi étanche (10), ou
- une étape de mise en pression créée par un ressort (8) qui comprime le tube extérieur (5) pour diminuer le volume total de la partie hydraulique (2a, 2b) dans laquelle une partie de la tige (3a) du piston est pénétrée.

## Claims

1. Compensation device of a hydraulic suspension shock absorber intended to be mounted between at least two parts of a vehicle which are mounted so as to be movable with respect to one another and/or are associated with a spring element (8) mounted with the shock absorber, the shock absorber comprising:
- a volume fixed to a first one (1b) of the two parts of the vehicle and incorporating a hydraulic part (2a, 2b) and formed by two chambers (2a, 2b) separated by the movable wall (3b) of a piston having at least one orifice for the passage of a fluid from one chamber to another, the volume of the hydraulic part (2a. 2b) being composed of at least one cartridge which forms a shock absorber body (4),
- a piston rod (3a) of which a first end is fixed to the movable wall (3b) of the piston and of which the second end is fixed on the second one (1a) of the two parts of the vehicle, the rod (3a) of the piston being aligned along an axis parallel to the axis of the shock absorber body (4),
**characterised in that** the compensation device of the hydraulic shock absorber comprises an external tube (5) forming a cartridge in which the shock absorber body (4) is disposed, the inner wall of the external tube (5) being capable of sliding against the outer wall of the shock absorber body (4) to compensate, at the level of the hydraulic chamber (2a) into which the piston rod (3a) is inserted, for the volume of the part of the piston rod (3a) introduced into the hydraulic chamber (2a) during a compression phase.

2. Compensation device of a hydraulic suspension shock absorber as claimed in Claim 1, **characterised in that** the sliding between the inner wall of the external tube (5) and the outer wall of the shock absorber body (4) is produced by sliding of the external tube towards the shock absorber body in order to form an annular space (6) which communicates in a sealed manner with the chamber (2a) of the hydraulic part of the shock absorber body into which the rod (3a) of the piston penetrates during compression of the shock absorber, the annular space (6) being intended to receive at least a part of the volume of liquid displaced by the volume occupied by the piston rod (3) in the hydraulic chamber (2a) during compression, and **in that** the annular space (6) communicates with the hydraulic part of the shock absorber body at the level of at least one orifice (4a) positioned in the part of the shock absorber body situated on the side of the hydraulic chamber (2a) occupied by the piston rod (3a).

3. Compensation device of a hydraulic suspension shock absorber as claimed in Claim 2, **characterised in that** in a plane perpendicular to the axis of the piston and/or the external tube, the section of the piston rod (3a) and the section of the annular space (6) between the external tube (5) and the shock absorber body (4) have identical surfaces such that the volume occupied by the part of the piston rod (3a) which has penetrated into the hydraulic chamber (2a, 2b) is identical to the increase in the volume formed by the annular space (6) between the external tube (5) and the shock absorber body.

4. Compensation device of a hydraulic suspension shock absorber as claimed in any one of Claims 2 to 3, **characterised in that** the shock absorber is an oleopneumatic shock absorber, a sealed wall (10) through which the piston rod (3a) extends closing the volume of the hydraulic part at the end of the cartridge of the shock absorber body, the piston rod (3a) being mounted so as to be fixed to the external tube (5) in such a way that the piston rod (3a) and the external tube (5) are joined when sliding relative to the shock absorber body (4) and allow co-ordination between the penetration of the piston rod (3a) into the hydraulic chamber (2a) and formation of a suitable volume by the annular space (6) between the external tube (5) and the shock absorber body (4).

5. Compensation device of a hydraulic suspension shock absorber as claimed in Claim 4, **characterised in that** the part of the external tube (5) which is not facing the shock absorber body (4) is formed by a cartridge which produces a sealed volume (11) in which a gas is kept compressed between one end of the cartridge and the surface of the shock absorber body into which the piston rod (3a) is inserted, the said piston rod comprising a wall (10) which is kept sealed between the volume of gas and the volume of liquid by a first seal (7a) positioned between the wall (10) and the rod (3a) and by a second seal (7b) positioned between the periphery of the wall and the inner edge of the external tube (5), the volume of compressed gas making it possible to keep the liquid in the hydraulic part of the shock absorber pressurised through the sealed wall (10) by transmitting the gas pressure to the liquid in the hydraulic part by means of seals (7a, 7b) which maintain the tight separation between the gas and the liquid which is effected by the wall (10).

6. Compensation device of a hydraulic suspension shock absorber as claimed in any one of Claims 2 to 5, **characterised in that** the annular space (6) is kept sealed by one or more seals (7b, 7c) positioned between the inner wall of the external tube (5) and the outer wall of the shock absorber body (4) and mounted so as to be fixed on the inner wall of the external tube (5) or the outer wall of the shock absorber body (4), and at least one seal (7b, 7c) is capable of being deformed or of moving relative to the structure on which it is mounted and fixed in order to compensate for a variation in the volume of the annular space (6).

7. Compensation device of a hydraulic suspension shock absorber as claimed in Claim 1, **characterised in that** the shock absorber is coupled to a spring (8) of which a first end bears against the part of the vehicle to which the piston rod (3a) is fixed, the external tube (5) which slides in a sealed manner with the cartridge of the shock absorber body (4) also forms a cartridge which closes the hydraulic part (2a, 2b) of the shock absorber while being traversed by the piston rod (3a), and the external tube (5) comprises at least one attachment means (9) against which the second end of the spring (8) bears in order to exert a pressure on the external tube (5) and to keep the liquid in the hydraulic cavity (2a, 2b) pressurised.

8. Compensation device of a hydraulic suspension shock absorber as claimed in Claim 7, **characterised in that** the penetration of the piston rod (3a) into the hydraulic chamber (2a, 2b) leads to sliding by spacing of the cartridge of the shock absorber body (4) and of the cartridge of the external tube (5) which increases the total volume of the hydraulic part (2a, 2b) of the shock absorber by a volume proportional to the volume of the part of the piston rod (3a) which has penetrated into the chamber (2a).

9. Method of operation of a compensation device of a hydraulic suspension shock absorber as claimed in any one of Claims 1 to 8, comprising at least:
- a step of compression of the shock absorber and penetration of at least one part of the piston rod (3a) into one of the chambers (2a, 2b) of the hydraulic part (2a, 2b) of the shock absorber,
**characterised in that** the method comprises a step of compensation by means of:
- a step of sliding of the shock absorber body (4) relative to the external tube (5) in order to adapt the annular volume (6) to the penetration of the piston rod (3a) into one of the hydraulic chambers (2a, 2b).

10. Method of operation as claimed in Claim 9 of a compensation device of a hydraulic suspension shock absorber as claimed in any one of Claims 6 to 8, **characterised in that** the method comprises at least one step of keeping the liquid pressurised in the hydraulic part (2a, 2b) of the shock absorber, carried out by:
- a step of pressurisation created by a compressed gas through a sealed wall (10) which separates the hydraulic liquid part (2a, 2b) from a volume of compressed gas in the shock absorber by compensating for the pressure exerted by the liquid in the hydraulic part (2a, 2b) against the sealed wall (10), or
- a step of pressurisation created by a spring (8) which compresses the external tube (5) in order to reduce the total volume of the hydraulic part (2a, 2b) into which a part of the piston rod (3a) has penetrated.

## Patentansprüche

1. Ausgleichsvorrichtung für einen hydraulischen Aufhängungsdämpfer zur Montage zwischen wenigstens zwei Teilen eines Fahrzeugs, die beweglich zueinander montiert und/oder mit einem Federelement (8) assoziiert sind, das mit dem Dämpfer montiert ist, wobei der hydraulische Dämpfer Folgendes umfasst:
- ein Volumen, das an einem ersten (1b) der zwei Teile des Fahrzeugs befestigt ist und einen hydraulischen Teil (2a, 2b) beinhaltet und von zwei Kammern (2a, 2b) gebildet wird, die durch die bewegliche Wand (3b) eines Kolbens getrennt sind, der wenigstens eine Öffnung für den Durchtritt einer Flüssigkeit von einer Kammer in eine andere aufweist, wobei das Volumen des hydraulischen Teils (2a, 2b) von wenigstens einer Patrone gebildet wird, die einen Dämpferkörper (4) bildet,
- eine Kolbenstange (3a), von der ein erstes Ende an der beweglichen Wand (3b) des Kolbens befestigt ist und deren zweites Ende am zweiten (1a) der zwei Teile des Fahrzeugs befestigt ist, wobei die Kolbenstange (3a) gemäß einer Achse parallel zur Achse des Dämpferkörpers (4) ausgerichtet ist,
**dadurch gekennzeichnet, dass** die Ausgleichsvorrichtung für den hydraulischen Dämpfer ein Außenrohr (5) umfasst, das eine Patrone bildet, in der der Dämpferkörper (4) angeordnet ist, wobei die Innenwand des Außenrohrs (5) gegen die Außenwand des Dämpfungskörpers (4) gleiten kann, um an der Hydraulikkammer (2a), in die sich die Kolbenstange (3a) bewegt, das Volumen des sich in einer Kompressionsphase in die Hydraulikkammer (2a) bewegten Teils der Kolbenstange (3a) auszugleichen.

2. Ausgleichsvorrichtung für einen hydraulischen Aufhängungsdämpfer nach Anspruch 1, **dadurch gekennzeichnet, dass** das Gleiten zwischen der Innenwand des Außenrohrs (5) und der Außenwand des Dämpferkörpers (4) durch Gleiten des Außenrohrs in Richtung des Dämpferkörpers erfolgt, um einen Ringraum (6) zu bilden, der abgedichtet mit der Kammer (2a) des hydraulischen Teils des Dämpferkörpers in Verbindung steht, in den die Kolbenstange (3a) bei einer Kompression des Dämpfers eindringt, wobei der Ringraum (6) so ausgelegt ist, dass er wenigstens einen Teil des Flüssigkeitsvolumens aufnimmt, das durch das bei der Kompression von der Kolbenstange (3a) in der Hydraulikkammer (2a) eingenommene Volumen verdrängt wird, und dadurch, dass der Ringraum (6) mit dem hydraulischen Teil des Dämpferkörpers (4) über wenigstens eine Öffnung (4a) in Verbindung steht, die sich in dem Teil des Dämpferkörpers (4) befindet, der sich auf der Seite der Hydraulikkammer (2a) befindet, die von der Kolbenstange (2a) eingenommen wird.

3. Ausgleichsvorrichtung für einen hydraulischen Aufhängungsdämpfer nach Anspruch 2, **dadurch gekennzeichnet, dass** in einer Ebene lotrecht zur Achse des Kolbens und/oder des Außenrohrs (5) die Sektion der Kolbenstange (3a) und die Sektion des Ringraums (6) zwischen dem Außenrohr (5) und dem Dämpferkörper (4) identische Oberflächen haben, so dass das Volumen, das von dem Teil der Kolbenstange (3a) eingenommen wird, der in die Hydraulikkammer (2a, 2b) eingedrungen ist, mit der Zunahme des Volumens identisch ist, das von dem Ringraum (6) zwischen dem Außenrohr (5) und dem Dämpferkörper (4) gebildet wird.

4. Ausgleichsvorrichtung für einen hydraulischen Aufhängungsdämpfer nach einem der Ansprüche 2 bis 3, **dadurch gekennzeichnet, dass**, da der Dämpfer ein pneumatisch-ölhydraulischer Dämpfer ist, wobei eine von der Kolbenstange (3a) durchquerte dichte Wand (10) das Volumen des hydraulischen Teils am Ende der Patrone des Dämpferkörpers (4) verschließt, die Kolbenstange (3a) fest am Außenrohr (5) montiert ist, so dass die Kolbenstange (3a) und das Außenrohr (5) in Bezug auf den Dämpferkörper (4) einstückig gleiten und eine Koordination zwischen dem Eindringen der Kolbenstange (3a) in die Hydraulikkammer (2a) und der Bildung eines Volumens zulassen, das durch den Ringraum (6) zwischen dem Außenrohr (5) und dem Dämpferkörper (4) adaptiert wird.

5. Ausgleichsvorrichtung für einen hydraulischen Aufhängungsdämpfer nach Anspruch 4, **dadurch gekennzeichnet, dass** der Teil des Außenrohrs (5), der sich nicht gegenüber dem Dämpferkörper (4) befindet, durch eine Patrone gebildet wird, die ein dichtes Volumen (11) realisiert, in dem ein Gas zwischen einem Ende der Patrone und der Fläche des Dämpferkörpers (4) komprimiert gehalten wird, in den die Stange (3a) des Kolbens eingeführt wird, der eine Wand (10) aufweist, die zwischen dem Gasvolumen und dem Flüssigkeitsvolumen durch eine erste Dichtung (7a), die sich zwischen der Wand (10) und der Stange (3a) befindet, und durch eine zweite Dichtung (7b) abgedichtet wird, die sich zwischen dem äußeren Umfang der Wand (10) und dem Innenrand des Außenrohrs (5) befindet, wobei es das komprimierte Gasvolumen zulässt, die Flüssigkeit des hydraulischen Teils des Dämpfers durch die dichte Wand (10) unter Druck zu halten, indem der Druck des Gases auf die Flüssigkeit des hydraulischen Teils mittels der Dichtungen (7a, 7b) übertragen wird, die die durch die Wand (10) bewirkte Trennung zwischen dem Gas und der Flüssigkeit abdichten.

6. Ausgleichsvorrichtung für einen hydraulischen Aufhängungsdämpfer nach einem der Ansprüche 2 bis 5, **dadurch gekennzeichnet, dass**, da der Ringraum (6) durch eine oder mehrere Dichtungen (7a, 7b) abgedichtet wird, die sich zwischen der Innenwand des Außenrohrs (5) und der Außenwand des Dämpferkörpers (4) befinden und fest an der Innenwand des Außenrohrs (5) oder an der Außenwand des Dämpferkörpers (4) montiert ist/sind, wenigstens eine Dichtung (7b, 7c) sich in Bezug auf die Struktur verformen oder verschieben kann, an der sie fest montiert ist, um eine Variation des Volumens des Ringraums (6) auszugleichen.

7. Ausgleichsvorrichtung für einen hydraulischen Aufhängungsdämpfer nach Anspruch 1, **dadurch gekennzeichnet, dass**, da der Dämpfer mit einer Feder (8) gekoppelt ist, von der ein erstes Ende an dem Teil des Fahrzeugs anliegt, an dem die Kolbenstange (3a) befestigt ist, das Außenrohr (5), das abgedichtet mit der Patrone des Dämpferkörpers (4) gleitet, ebenfalls eine Patrone bildet, die den hydraulischen Teil (2a, 2b) des Dämpfers verschließt, der von der Kolbenstange (3a) durchquert wird, wobei das Außenrohr (5) wenigstens ein Aufhängmittel (9) umfasst, an dem das zweite Ende der Feder (8) anliegt, um einen Druck auf das Außenrohr (5) auszuüben und die Flüssigkeit in der Hydraulikkammer (2a, 2b) unter Druck zu halten.

8. Ausgleichsvorrichtung für einen hydraulischen Aufhängungsdämpfer nach Anspruch 7, **dadurch gekennzeichnet, dass** das Eindringen der Kolbenstange (3a) in die Hydraulikkammer (2a, 2b) ein Gleiten durch ein Entfernen der Patrone des Dämpfungskörpers (4) und der Patrone des Außenrohrs (5) mit sich bringt, so dass das Gesamtvolumen des hydraulischen Teils (2a, 2b) des Dämpfers von einem Volumen proportional zum Volumen des Teils der Kolbenstange (3a) erhöht wird, der in die Kammer (2a) eingedrungen ist.

9. Verfahren zum Betreiben einer Ausgleichsvorrichtung für einen hydraulischen Aufhängungsdämpfer nach einem der Ansprüche 1 bis 8, das wenigstens die folgenden Schritte beinhaltet:
- einen Schritt des Komprimierens des Dämpfers mit einem Eindringen von wenigstens einem Teil der Kolbenstange (3a) in eine der Kammern (2a, 2b) des hydraulischen Teils (2a, 2b) des Dämpfers,
**dadurch gekennzeichnet, dass** das Verfahren einen Ausgleichsschritt umfasst wie folgt:
- einen Schritt des Gleitenlassens des Dämpferkörpers (4) in Bezug auf das Außenrohr (5), um das Ringvolumen (6) an das Eindringen der Kolbenstange (3a) in eine der Hydraulikkammern (2a, 2b) anzupassen.

10. Verfahren nach Anspruch 9 zum Betreiben einer Ausgleichsvorrichtung für einen hydraulischen Aufhängungsdämpfer nach einem der Ansprüche 6 bis 8, **dadurch gekennzeichnet, dass** das Verfahren wenigstens einen Schritt des Unterdruckhaltens der Flüssigkeit des hydraulischen Teils (2a, 2b) des Dämpfers wie folgt beinhaltet:
- einen Unterdrucksetzungsschritt, wobei der Druck von einem komprimierten Gas durch eine dichte Wand (10) erzeugt wird, die den Hydraulikflüssigkeitsteil (2a, 2b) von einem komprimierten Gasvolumen des Dämpfers trennt, unter Ausgleich des Drucks, der von der Flüssigkeit des hydraulischen Teils (2a, 2b) auf die dichte Wand (10) ausgeübt wird, oder
- einen Unterdrucksetzungsschritt, wobei der Druck von einer Feder (8) erzeugt wird, die das Außenrohr (5) komprimiert, um das Gesamtvolumen des hydraulischen Teils (2a, 2b) zu verringern, in den ein Teil der Kolbenstange (3a) eingedrungen ist.
